# FASCICULE DE BREVET EUROPEEN

(11) **EP 2 917 502 B1**
(45) Date de publication et mention de la délivrance du brevet: **07.08.2019**
(21) Numéro de dépôt: 13782804.2
(22) Date de dépôt: 07.10.2013
(51) Int. Cl.: F01D 11/12, F01D 5/28, C04B 35/48

(54) **ENSEMBLE ROTOR-STATOR POUR MOTEUR À TURBINE À GAZ**
STATOR- UND DREHVORRICHTUNG FÜR EIN GASTURBINENTRIEBWERK
ROTOR-STATOR ASSEMBLY FOR A GAS TURGINE ENGINE

(30) Priorité: 11.10.2012 FR 1259704
(43) Date de publication de la demande: 16.09.2015
(73) Titulaire: Safran Helicopter Engines, 64510 Bordes (FR)
(72) Inventeur: GURT SANTANACH, Julien, F-40180 Riviere Saas Gourby (FR); CRABOS, Fabrice, F-64510 Assat (FR)
(74) Mandataire: Boura, Olivier
(86) Numéro de dépôt international: PCT/FR2013/052370
(87) Numéro de publication internationale: WO 2014/057194

(56) Documents cités:
- EP-A1- 1 593 757
- GB-A- 2 226 050
- US-A- 5 743 013
- US-A1- 2005 129 511

## Description

### Arrière-plan de l'invention

La présente invention se rapporte au domaine général des ensembles rotor-stator pour moteur à turbine à gaz. Elle vise plus précisément l'optimisation des microstructures de revêtement abrasif et de revêtement abradable qui sont déposés respectivement au sommet d'un rotor et sur la surface interne d'un stator entourant le rotor.

Un domaine particulier d'application de l'invention est celui des compresseurs et des turbines d'un moteur aéronautique (notamment d'avion ou d'hélicoptère).

Un compresseur de moteur aéronautique comprend un carter de compresseur formé d'une ou plusieurs structures annulaires situées en regard d'un ou plusieurs ensembles d'aubes avec mouvement de rotation relatif entre aubes et structures annulaires. De même, une turbine de moteur aéronautique comprend un anneau de turbine formé d'une structure annulaire monobloc ou d'une pluralité de secteurs d'anneaux jointifs qui entourent un ensemble d'aubes rotatives mues par les gaz de combustion.

Afin d'assurer le meilleur rendement possible d'un moteur aéronautique, il est impératif d'éviter ou au moins de limiter au minimum des fuites de gaz entre les sommets des aubes et la surface en regard du carter de compresseur ou de l'anneau de turbine, lesquelles fuites ne contribuent pas au fonctionnement du moteur. La recherche d'une absence de jeu ou d'un jeu minimum fait que des contacts peuvent être inévitables entre les sommets des aubes et le matériau situé en vis-à-vis. En raison de la dureté habituelle de ce matériau, de tels contacts peuvent être destructeurs vis-à-vis des sommets d'aubes.

Afin de résoudre ce problème, il a été proposé d'optimiser l'abradabilité du matériau situé en vis-à-vis des aubes, c'est-à-dire sa capacité à être usé physiquement par les sommets des aubes sans induire d'usure importante de ces derniers. Une technique connue à cet effet consiste à munir, d'une part la surface interne du carter de compresseur ou de l'anneau de turbine d'une couche formant revêtement abradable en matériau poreux, et d'autre part le sommet des aubes d'une couche en matériau dense formant revêtement abrasif.

Pour le revêtement abrasif déposé en sommet d'aubes, il est ainsi connu de recourir à un matériau contenant des particules de nitrure de bore cubique (cBN) ou d'autres particules dures de type oxydes, carbures ou nitrures. En effet, de tels revêtements présentent un comportement abrasif satisfaisant quand ils sont associés à un revêtement abradable métallique ou en céramique. Cependant, ils montrent une faible durabilité lors de leur utilisation en température (ces revêtements sont sujets à oxydation et à diffusion dans la matrice des revêtements) et un comportement thermomécanique limité qui n'est pas compatible avec les durées de vie recherchées. De plus, le dépôt de tels revêtements est relativement onéreux.

Pour le revêtement abradable poreux déposé sur la surface interne du stator, il est connu d'utiliser un alliage métallique de type MCrAIY ou une céramique à base de Zircone. Un alliage métallique présente l'avantage d'être facile à réaliser et de faible coût. En revanche, ses propriétés d'abradabilité sont relativement faibles et son utilisation est limitée en température. A l'inverse, une céramique à base Zircone peut être utilisée pour permettre à la fois une fonction de revêtement abradable et une fonction de barrière thermique. En effet, la nature du revêtement à base d'oxydes lui donne la possibilité d'être utilisé à haute température (supérieure à 1100°C) car il conserve ses propriétés physiques. Ce revêtement est également réputé pour être facile à réaliser, de faible coût (dépôt par projection thermique) et présente, pour un certain niveau de porosité, de bonnes propriétés d'abradabilité. Toutefois, un tel revêtement poreux présente des problèmes d'état de surface après usinage du fait de la difficulté de mise en forme et du contrôle de la taille des porosités et des grains dans la couche. Or, ce niveau d'état de surface dans la veine d'air est nuisible aux performances du moteur.

De manière générale, les couples de revêtements abradables / abrasifs connus de l'art antérieur, même s'ils démontrent une bonne propriété particulière parmi les propriétés principales recherchées (à savoir : comportement du système à la touche, tenue à l'érosion, tenue au cyclage thermique et état de surface optimal), aucun d'entre eux ne permet de façon isolée d'obtenir une optimisation de l'ensemble des propriétés recherchées.

Il existe donc un besoin de pouvoir disposer d'un couple de revêtements pour le matériau abradable et le matériau abrasif disposés respectivement sur la surface interne du stator et le sommet du rotor qui minimise tous les inconvénients précités. GB 2226 050 A montre les caractéristiques techniques du préambule de la revendication indépendante 1.

### Objet et résumé de l'invention

La présente invention a donc pour but de fournir un couple de revêtements qui présente un comportement homogène et performant pour l'ensemble des propriétés principales précitées, notamment à haute température, tout en étant de faible coût à réaliser.

Ce but est atteint grâce à un ensemble rotor-stator pour moteur à turbine à gaz, comprenant :
un rotor au sommet duquel est déposée une couche en matériau céramique formant revêtement abrasif, ladite couche étant constituée principalement de zircone et possédant un taux de porosité égal ou inférieur à 15%, et
un stator disposé autour du rotor et muni en regard du sommet du rotor d'une couche en matériau céramique formant revêtement abradable, ladite couche étant constituée principalement de zircone et possédant un taux de porosité compris entre 20% et 50% avec des pores de taille inférieure ou égale à 50 µm.

Un tel couple de revêtements abrasif/abradable présente de nombreux avantages. Notamment, il a été constaté par la Demanderesse que le revêtement abrasif en matériau céramique à base de zircone possède un comportement abrasif particulièrement performant lorsqu'il est associé à un revêtement abradable en matériau céramique à base de zircone ayant un taux de porosité compris entre 20% et 50% avec pores de taille inférieure ou égale à 50 µm. De même, il a également été constaté par la Demanderesse que le revêtement abradable en matériau céramique à base de zircone conforme à l'invention possède un comportement abradable satisfaisant lorsqu'il est associé à un revêtement abrasif en matériau céramique à base de zircone.

De plus, le revêtement abradable montre un comportement homogène sur l'ensemble des conditions de touche (à savoir vitesse tangentielle, vitesse d'incursion et température) et peut être utilisé à haute température (supérieure à 1100°C). Il s'agit en outre d'un matériau assurant une double fonction de barrière thermique et de revêtement abradable et son état de surface après usinage est satisfaisant.

Par ailleurs, ce couple de revêtements abrasif/abradable est aisé de réalisation et de réparation et présente un faible de coût de fabrication. En effet, le matériau principalement à base de Zircone peut être déposé par projection thermique, par procédé sol-gel ou par frittage pour ce qui concerne le revêtement abradable, ces procédés de dépôt étant aisés à mettre en oeuvre.

De préférence, la porosité de la couche de revêtement abradable est répartie de manière homogène au sein de ladite couche.

La porosité de la couche de revêtement abradable peut présenter une distribution monomodale avec des pores de taille inférieure ou égale à 5 µm. Alternativement, la porosité peut présenter une distribution bimodale avec des pores fins de taille inférieure ou égale à 5 µm et des pores moyens de taille comprise entre 15 µm et 50 µm.

De plus, la couche de revêtement abradable peut être formée d'au moins deux parties de couche ayant des taux de porosités différents. L'évolution de la porosité dans la profondeur du revêtement abradable permet de favoriser la résistance aux chocs thermiques du revêtement, de favoriser la résistance aux cycles thermiques et d'augmenter le pouvoir isolant du revêtement (barrière thermique plus efficace). La couche de revêtement abradable peut également comprendre des fissures verticales.

De préférence également, la couche de revêtement abradable présente un module élastique compris entre 4 et 10 GPa et une dureté comprise entre 70 et 95 HRC. De telles propriétés confèrent au revêtement abradable une meilleure résistance aux chocs thermiques et une résistance à l'érosion suffisante tout en conservant un haut caractère abradable.

De même, la couche de revêtement abrasif présente avantageusement un module élastique supérieur ou égal à 30 GPa et une dureté supérieure à 600 HV.

De préférence encore, la zircone constituant les couches de revêtement abradable et de revêtement abrasif est dopée à l'yttrium, au gadolinium, au dysprosium ou à tout autre stabilisant de la zircone en phase quadratique ou cubique.

La couche de revêtement abradable peut être déposée sur le stator par projection thermique, par frittage ou par procédé sol-gel. De même, la couche de revêtement abrasif peut être déposée sur le sommet du rotor par projection thermique, par frittage, par procédé électrolytique, par procédé de dépôt en phase vapeur ou par procédé sol-gel.

L'invention a aussi pour objet un moteur à turbine à gaz comprenant au moins un ensemble rotor-stator tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'un exemple d'ensemble rotor-stator conforme à l'invention ;
- les figures 2A-2C, 3A-3C, et 4A-4B montrent différents modes de réalisation de matériaux pouvant être utilisés comme revêtement abradable pour le stator de l'ensemble de la figure 1 ; et
- les figures 5 et 6 sont des clichés montrant le comportement lors d'un essai des revêtements abrasif et abradable, respectivement d'un ensemble rotor-stator selon l'art antérieur et d'un ensemble rotor-stator conforme à l'invention.

### Description détaillée de l'invention

L'invention s'applique à tout ensemble rotor-stator pour moteur à turbine à gaz dans lequel le sommet du rotor vient en contact avec la surface interne de la partie du stator entourant le rotor.

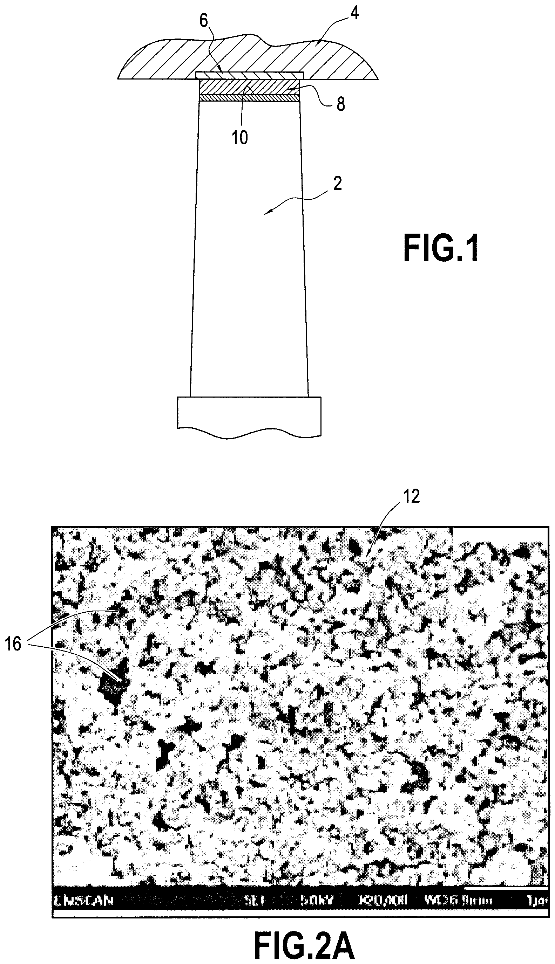

La figure 1 représente de façon schématique un exemple d'application de l'invention dans lequel le rotor est constitué d'aubes rotatives 2 d'une turbine haute-pression de turboréacteur et le stator est un anneau de turbine 4 monobloc ou formé d'une pluralité de secteurs d'anneaux jointifs entourant les aubes.

Dans un tel ensemble, le jeu entre la surface interne de l'anneau de turbine 4 et le sommet des aubes 2 est nul ou quasi-nul. L'anneau de turbine comprend, du côté interne, un revêtement abradable 6 dans lequel un revêtement abrasif 8 déposé sur les sommets des aubes 2 peut partiellement pénétrer sans subir d'usure importante.

Selon l'invention, la couche formant le revêtement abrasif 8 est formée d'un matériau céramique constitué principalement de zircone et possédant un taux de porosité égal ou inférieur à 15%, tandis que la couche formant le revêtement abradable 6 est formée d'un céramique constitué principalement de zircone et possédant un taux de porosité compris entre 20% et 50% avec des pores de taille inférieure ou égale à 50 µm.

Par « principalement », on entend ici que la zircone des couches de revêtement abradable et revêtement abrasif représente au moins 80% de la composition de ces couches.

Le revêtement abradable 6 et le revêtement abrasif 8 de l'ensemble rotor-stator conforme à l'invention sont donc réalisés à partir d'une même céramique, à savoir la zircone, avec des microstructures différentes. En effet, la couche de zircone constituant le revêtement abrasif possède une porosité relativement faible de manière à garantir des propriétés mécaniques (dureté et résistance aux chocs thermiques) les plus élevées possible, tandis que la couche de zircone constituant le revêtement abradable présente une microstructure fine (à savoir une taille des pores qui est inférieure ou égale à 50 µm) et une porosité contrôlée de façon à favoriser la résistance à l'érosion du revêtement et garantir des propriétés d'abradabilité performantes.

Pour les deux revêtements, on utilisera une zircone pouvant être avantageusement dopée (à l'yttrium, au gadolinium, au dysprosium, ou à tout autre stabilisant de la zircone en phase quadratique ou cubique). Il n'est cependant pas nécessaire que la composition de la poudre de zircone formant ces revêtements soit strictement identique pour les deux revêtements. Ainsi, on pourra par exemple ajouter des agents stabilisés dans l'une ou l'autre des poudres.

De préférence, le revêtement abrasif 8 déposé en sommet des aubes 2 présente en outre un module élastique supérieur ou égal à 30 GPa (giga-pascals) et une dureté supérieure à 600 HV (indice de dureté Vickers).

La couche de revêtement abrasif pourra être déposée sur le sommet des aubes par des procédés connus en soi telle que la projection thermique, le frittage, le procédé électrolytique, le procédé de dépôt en phase vapeur ou le procédé sol-gel.

On pourra également avoir recours à une sous-couche 10 pour faciliter le dépôt de la couche de revêtement abrasif sur les sommets des aubes qui sont métalliques. Par exemple, la sous-couche d'accrochage 10 pourra être constituée de MCrAIY (avec M pour Ni, Co, NiCo) ou d'un revêtement d'aluminure de platine.

En liaison avec les figures 2A-2C, 3A-3C, et 4A-4B, on décrira maintenant différents modes de réalisation de microstructures de couches de matériau formant le revêtement abradable de l'ensemble rotor-stator selon l'invention.

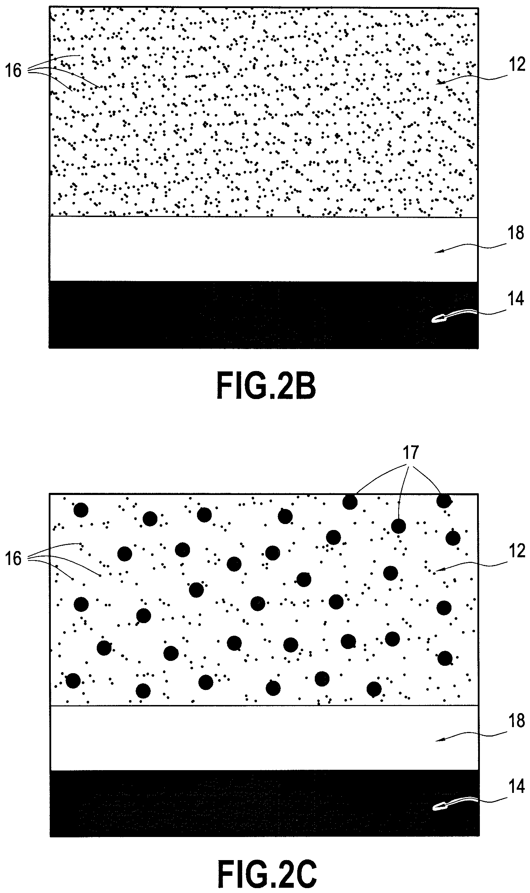

Les figures 2A et 2B montrent un premier mode de réalisation, sous forme respectivement d'un cliché (échelle : 1µm) et d'une vue schématique, d'une telle couche 12 formée principalement de zircone et déposée sur un substrat 14. Dans cet exemple, la porosité (les pores sont illustrés par les zones noires 16) est dite fine, c'est-à-dire qu'elle est formée de pores qui sont de taille inférieure ou égale à 5 µm, et homogène dans sa répartition dans l'épaisseur de la couche. La distribution de la porosité dans la couche est ici monomodale.

On notera que cette couche 12 peut être déposée sur le substrat par l'intermédiaire d'une sous-couche d'accrochage 18 formée par exemple d'un dépôt d'alliage de type MCrAIY (avec M pour Ni, Co, NiCo), d'un revêtement d'aluminure de platine ou autres.

Par ailleurs, dans une variante de ce premier mode de réalisation représentée par la figure 2C, la couche 12 de zircone comprend en outre des particules 17 de lubrifiant solide, telles que par exemple des particules de nitrure de bore hexagonal. De telles particules permettent de faciliter le déplacement des aubes lors du contact rotor/stator et de limiter les efforts entre rotor et stator.

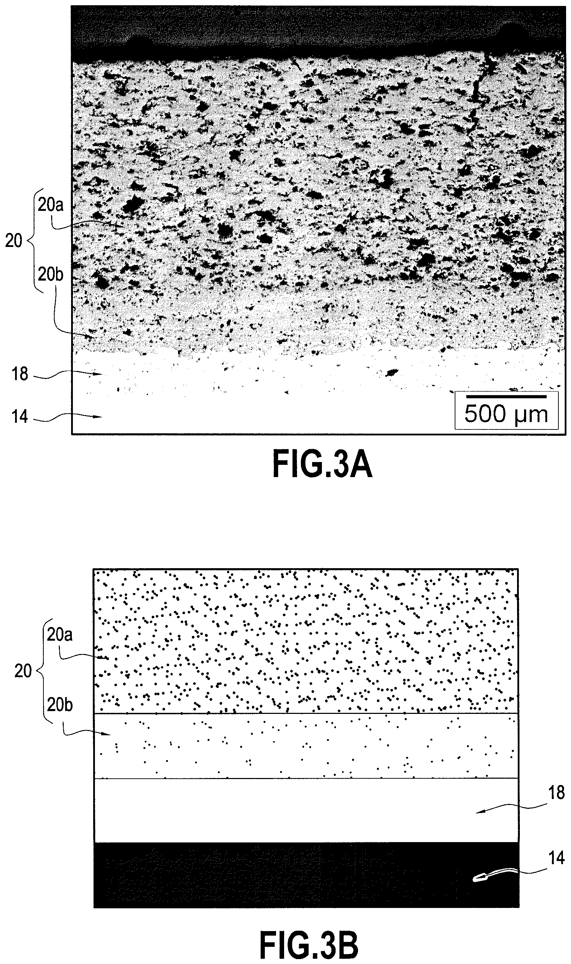

Les figures 3A à 3C montrent un deuxième mode de réalisation d'une couche 20 déposée sur un substrat 14 et pouvant être utilisée pour constituer le revêtement abradable de l'ensemble rotor-stator.

Dans ce deuxième mode de réalisation, la couche 20 est formée de deux couches 20a, 20b en zircone ayant des microstructures différentes. Ainsi, la couche 20a disposée du côté de la zone d'abrasion présente une porosité importante (c'est-à-dire ayant un taux de porosité compris entre 20% et 50%), tandis que la couche 20b disposée du côté du substrat 14 présente une porosité plus faible (de l'ordre de 10 à 20%).

Ainsi, on obtient une couche ayant une forte porosité en surface pour jouer le rôle d'abradable et une sous-couche dense du côté du substrat pour jouer le rôle de barrière thermique. Une telle évolution de la porosité dans la profondeur du revêtement abradable permet de favoriser la résistance aux chocs thermiques du revêtement, de favoriser la résistance aux cycles thermiques et d'augmenter le pouvoir isolant du revêtement (barrière thermique plus efficace).

On notera que cette couche 20 pourra être déposée sur le substrat par l'intermédiaire d'une sous-couche d'accrochage 18.

On notera également que dans chacune des deux couches 20a, 20b, les pores sont de préférence répartis de manière homogène dans toute l'épaisseur des couches.

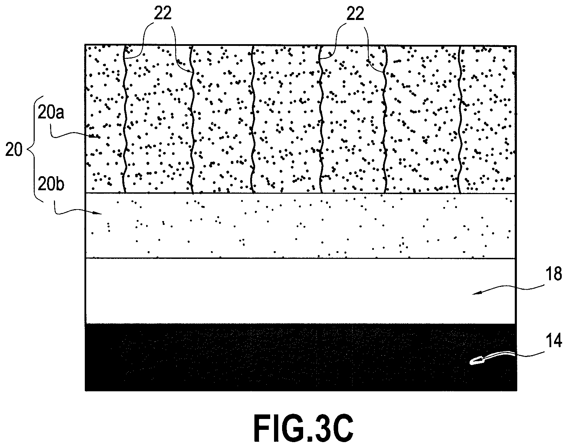

Par ailleurs, dans une variante de ce deuxième mode de réalisation représentée par la figure 3C, la couche 20a disposée du côté de la zone d'abrasion pourra présenter un réseau de fissures verticales 22 (au moins 2 fissures tous les millimètres) de sorte à améliorer le comportement thermomécanique du revêtement.

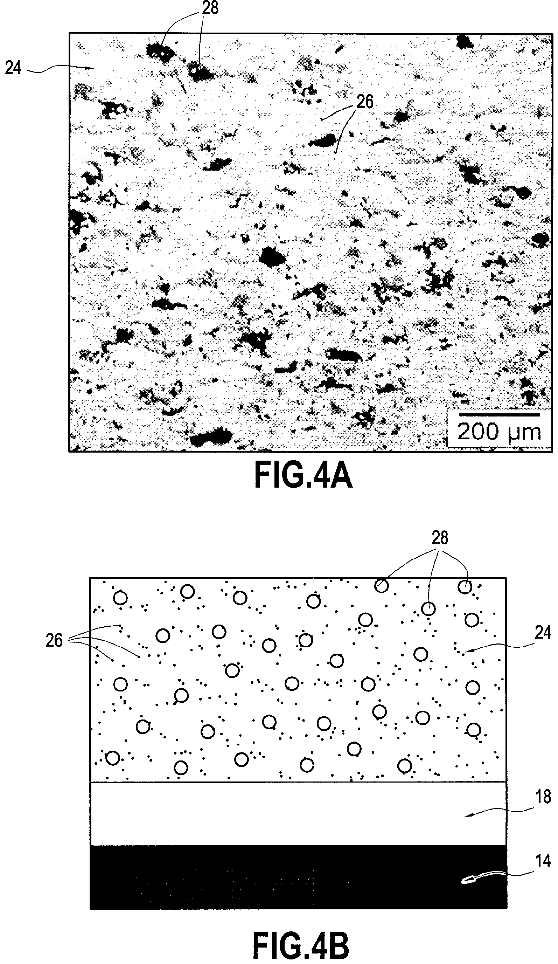

Les figures 4A-4B illustrent un troisième mode de réalisation d'une couche 24 déposée sur un substrat 14 et pouvant être utilisée pour constituer le revêtement abradable de l'ensemble rotor-stator.

Dans ce troisième mode de réalisation, la couche 24 est formée d'une couche en zircone avec une porosité importante (c'est-à-dire ayant un taux de porosité compris entre 20% et 50%).

Par rapport au premier mode de réalisation, la distribution de la porosité dans la couche est ici bimodale, c'est-à-dire que les pores se répartissent entre des pores dits « fins » (c'est-à-dire ayant une taille inférieure ou égale à 5 µm) et des pores dits « moyens » (c'est-à-dire ayant une taille comprise entre 15 et 50 µm).

Sur le cliché de la figure 4A, les pores de taille fine sont ainsi représentés par les zones noires 26, tandis que les pores de taille moyenne sont représentés par les zones noires 28. On notera que quelle que soit la taille des pores, leur répartition dans la couche 24 est homogène.

On décrira maintenant d'autres caractéristiques communes aux différents exemples de réalisation de la couche formant le revêtement abradable de l'ensemble rotor-stator.

De préférence, cette couche de revêtement abradable présente un module élastique compris entre 4 et 10 GPa. De telles valeurs confèrent au revêtement une meilleure résistance aux chocs thermiques.

De préférence également, la couche de revêtement abradable présente une dureté comprise entre 70 et 95 HR15Y (indice de dureté Rockwell superficielle), ce qui permet de garantir une résistance à l'érosion suffisante tout en ayant un haut caractère abradable.

Par ailleurs, la couche de revêtement abradable pourra être déposée par projection thermique d'une poudre agglomérée contenant de préférence un agent porogène et un lubrifiant solide. On pourra également recourir à une projection thermique d'une suspension de poudre nanométrique qui favorise l'obtention d'une microstructure plus fine. De même, on pourra modifier les paramètres de projection de façon à obtenir une microstructure avec des fissures verticales et un taux de porosité supérieur à 20%.

On pourra aussi recourir à un dépôt par frittage de poudres ayant une microstructure submicronique avec ou sans agent porogène et lubrifiant solide. Le frittage permet un contrôle accru de la microstructure par la mise en forme du dépôt à une température inférieure à la température de fusion de la céramique. En particulier, la microstructure pourra être conservée fine et la porosité pourra être contrôlée tant dans son homogénéité que dans sa taille et sa répartition.

On pourra encore recourir à un procédé sol-gel pour déposer la couche de revêtement abradable.

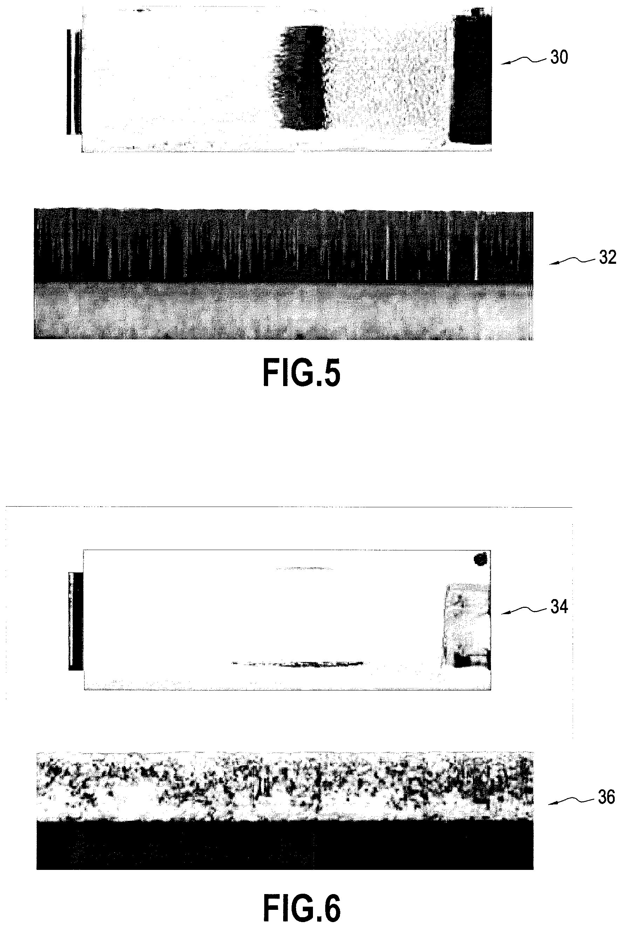

En liaison avec les figures 5 et 6, on décrira maintenant les résultats d'essais d'abradabilité et d'usure d'un couple de revêtements abrasif/abradable de l'art antérieur (figure 5) et d'un couple de revêtements abrasif/abradable conforme à l'invention (figure 6).

Ces essais ont été réalisés à l'aide d'un banc d'essais tel que ceux proposés par la société Sulzer Innotec. De façon connue, un tel banc comprend un rotor sur lequel est montée une lame munie à son extrémité libre d'une couche de revêtement abrasif et un plateau sur lequel est monté un échantillon de revêtement abradable, ce plateau pouvant être rapproché du rotor pour permettre une incursion du matériau abrasif dans le matériau abradable. Le banc d'essais comprend également un générateur de flamme à haute vitesse destiné à chauffer le revêtement abradable au cours de l'essai.

Les essais ont été conduits dans les mêmes conditions avec une vitesse de rotation du rotor de 410 m/s, une température de chauffe du revêtement abradable de l'ordre de 1100°C et une vitesse d'incursion du revêtement abrasif dans le revêtement abradable de l'ordre de 50 µm/s.

La figure 5 illustre l'état de surface après essai d'un revêtement abradable 30 constitué d'une zircone dense (taux de porosité de l'ordre de 10%) et une vue de dessus d'un sommet de pale (sans revêtement) 32 ayant touché conformément à l'art antérieur.

Sur cette figure, on constate une forte usure au niveau du sommet de pale et une mauvaise touche au niveau du revêtement abradable déposé sur le stator avec la présence d'un transfert de matière de la pale vers le stator.

Quant à la figure 6, elle illustre l'état de surface après essai d'un revêtement abradable 34 et une vue en coupe d'un revêtement abrasif 36 conformes à l'invention. En particulier, dans cet essai, le revêtement abradable 34 utilisé possédait un taux de porosité compris entre 25% et 28% avec une microstructure fine constituée de pores fins et de pores moyens (distribution bimodale) qui sont répartis de manière homogène comme décrit en liaison avec les figures 3A et 3B. De même, le revêtement abrasif 36 en zircone partiellement stabilité à l'yttrium possédait un taux de porosité de l'ordre de 10%.

Sur cette figure, on constate, par opposition à la figure 5, une faible usure au niveau du revêtement abrasif déposé sur le rotor et une bonne touche au niveau du revêtement abradable déposé sur le stator. Il en résulte un bon comportement en matière d'abradibilité et d'usure du couple de revêtements abrasif/abradable de l'ensemble rotor-stator conforme à l'invention.

## Revendications

1. Ensemble rotor-stator pour moteur à turbine à gaz, comprenant :
un rotor (2) au sommet duquel est déposée une couche (8) en matériau céramique formant revêtement abrasif,
un stator (4) disposé autour du rotor et muni en regard du sommet du rotor d'une couche (6 ; 12 ; 20 ; 24) en matériau céramique formant revêtement abradable, ladite couche étant constituée principalement de zircone et possédant un taux de porosité compris entre 20% et 50% avec des pores de taille inférieure ou égale à 50 µm. **caractérisé en ce que** la couche (8) déposée sur le rotor étant constituée principalement de zircone et possédant un taux de porosité égal ou inférieur à 15%.

2. Ensemble selon la revendication 1, dans lequel la porosité de la couche de revêtement abradable est répartie de manière homogène au sein de ladite couche.

3. Ensemble selon l'une des revendications 1 et 2, dans lequel la porosité de la couche de revêtement abradable présente une distribution monomodale avec des pores de taille inférieure ou égale à 5 µm.

4. Ensemble selon l'une des revendications 1 et 2, dans lequel la porosité de la couche de revêtement abradable présente une distribution bimodale avec des pores fins de taille inférieure ou égale à 5 µm et des pores moyens de taille comprise entre 15 µm et 50 µm.

5. Ensemble selon l'une quelconque des revendications 1 à 4, dans lequel la couche (20) de revêtement abradable est formée d'au moins deux parties de couche (20a, 20b) ayant des taux de porosités différents.

6. Ensemble selon l'une quelconque des revendications 1 à 5, dans lequel la couche (20) de revêtement abradable comprend des fissures verticales (22).

7. Ensemble selon l'une quelconque des revendications 1 à 6, dans lequel la couche de revêtement abradable présente un module élastique compris entre 4 et 10 GPa et une dureté comprise entre 70 et 95 HR15Y.

8. Ensemble selon l'une quelconque des revendications 1 à 7, dans lequel la couche de revêtement abrasif présente un module élastique supérieur ou égal à 30 GPa et une dureté supérieure à 600 HV.

9. Ensemble selon l'une quelconque des revendications 1 à 8, dans lequel la zircone constituant les couches de revêtement abradable et de revêtement abrasif est dopée à l'yttrium, au gadolinium, au dysprosium ou à tout autre stabilisant de la zircone en phase quadratique ou cubique.

10. Ensemble selon l'une quelconque des revendications 1 à 9, dans lequel la couche de revêtement abradable est déposée sur le stator par projection thermique, par frittage ou par procédé sol-gel.

11. Ensemble selon l'une quelconque des revendications 1 à 10, dans lequel la couche de revêtement abrasif est déposée sur le sommet du rotor par projection thermique, par frittage, par procédé électrolytique, par procédé de dépôt en phase vapeur ou par procédé sol-gel.

12. Ensemble selon l'une quelconque des revendications 1 à 11, dans lequel le rotor est une aube de turbine et le stator est un carter de turbine.

13. Moteur à turbine à gaz comprenant au moins un ensemble rotor-stator selon l'une quelconque des revendications 1 à 12.

## Patentansprüche

1. Rotor-Stator-Anordnung für ein Gasturbinentriebwerk, umfassend:
einen Rotor (2), auf dessen Oberseite eine Schicht (8) aus Keramikmaterial, welche eine Abriebbeschichtung bildet, abgeschieden ist,
einen Stator (4), der um den Rotor herum angeordnet und gegenüber der Oberseite des Rotors mit einer Schicht (6; 12; 20; 24) aus Keramikmaterial, die eine abreibbare Beschichtung bildet, versehen ist, wobei die Schicht hauptsächlich aus Zirkoniumoxid besteht und einen Porositätsgrad im Bereich zwischen 20 % und 50 %, mit Poren mit einer Größe von weniger als oder gleich 50 µm aufweist,
**dadurch gekennzeichnet, dass** die auf dem Rotor abgeschiedene Schicht (8) hauptsächlich aus Zirkoniumoxid besteht und einen Porositätsgrad von gleich oder weniger als 15 % aufweist..

2. Anordnung nach Anspruch 1, bei der die Porosität der abreibbaren Überzugsschicht innerhalb der Schicht homogen verteilt ist.

3. Anordnung nach einem der Ansprüche 1 und 2, bei der die Porosität der abreibbaren Überzugsschicht eine monomodale Verteilung mit Poren mit einer Größe von weniger als oder gleich 5 µm aufweist.

4. Anordnung nach einem der Ansprüche 1 und 2, bei der die Porosität der abreibbaren Überzugsschicht eine bimodale Verteilung mit feinen Poren mit einer Größe von weniger als oder gleich 5 µm und mittleren Poren mit einer Größe im Bereich zwischen 15 µm und 50 µm aufweist.

5. Anordnung nach einem der Ansprüche 1 bis 4, bei der die abreibbare Überzugsschicht (20) von wenigstens zwei Schichtteilen (20a, 20b) mit unterschiedlichen Porositätsgraden gebildet ist.

6. Anordnung nach einem der Ansprüche 1 bis 5, bei der die abreibbare Überzugsschicht (20) vertikale Risse (22) aufweist.

7. Anordnung nach einem der Ansprüche 1 bis 6, bei der die abreibbare Überzugsschicht einen Elastizitätsmodul im Bereich zwischen 4 und 10 GPa und eine Härte im Bereich zwischen 70 und 95 HR15Y aufweist.

8. Anordnung nach einem der Ansprüche 1 bis 7, bei der die Abriebbeschichtungsschicht einen Elastizitätsmodul größer oder gleich 30 GPa und eine Härte größer als 600 HV aufweist.

9. Anordnung nach einem der Ansprüche 1 bis 8, bei der das Zirkoniumoxid, das die abreibbaren Überzugs- und Abriebbeschichtungsschichten bildet, mit Yttrium, Gadolinium, Dysprosium oder mit jedwedem anderen Zirkoniumoxid-Stabilisator in quadratischer oder kubischer Phase dotiert ist.

10. Anordnung nach einem der Ansprüche 1 bis 9, bei der die abreibbare Überzugsschicht durch thermisches Spritzen, durch Sintern oder mittels Sol-Gel-Verfahren auf dem Stator abgeschieden ist.

11. Anordnung nach einem der Ansprüche 1 bis 10, bei der die Abriebbeschichtungsschicht durch thermisches Spritzen, durch Sintern, mittels elektrolytischem Verfahren, durch ein Verfahren zum Abscheiden aus der Gasphase oder mittels Sol-Gel-Verfahren auf der Oberseite des Rotors abgeschieden ist.

12. Anordnung nach einem der Ansprüche 1 bis 11, bei der der Rotor eine Turbinenschaufel und der Stator ein Turbinengehäuse ist.

13. Gasturbinentriebwerk, umfassend wenigstens eine Rotor-Stator-Anordnung nach einem der Ansprüche 1 bis 12.

## Claims

1. A rotor-stator assembly for a gas turbine engine, the assembly comprising:
a rotor (2) having a layer (8) of ceramic material forming an abrasive coating deposited on its tip,
a stator (4) arranged around the rotor and provided facing the tip of the rotor with a layer (6; 12; 20; 24) of ceramic material forming an abradable coating, said layer being constituted mainly by zirconia possessing a void ratio lying in the range 20% to 50% with pores having size less than or equal to 50 pm,
**characterized in that** the layer (8) deposited on the rotor is constituted mainly by zirconia and comprises a void ratio less than or equal to 15%.

2. An assembly according to claim 1, wherein the porosity of the abradable coating layer is shared uniformly within said layer.

3. An assembly according to claim 1 or claim 2, wherein the porosity of the abradable coating layer presents distribution that is monomodal with pores of a size less than or equal to 5 µm.

4. An assembly according to claim 1 or claim 2, wherein the porosity of the abradable coating layer presents a distribution that is bimodal with fine pores of size less than or equal to 5 µm and medium pores of size lying in the range 15 µm to 50 µm.

5. An assembly according to any one of claims 1 to 4, wherein the abradable coating layer (20) is made up of at least two layer portions (20a, 20b) having different void ratios.

6. An assembly according to any one of claims 1 to 5, wherein the abradable coating layer (20) includes vertical cracks (22).

7. An assembly according to any one of claims 1 to 6, wherein the abradable coating layer presents a modulus of elasticity lying in the range 4 GPa to 10 GPa and a hardness lying in the range 70 HR15Y to 95 HR15Y.

8. An assembly according to any one of claims 1 to 7, wherein the abrasive coating layer presents a modulus of elasticity greater than or equal to 30 GPa and a hardness greater than 600 HV.

9. An assembly according to any one of claims 1 to 8, wherein the zirconia constituting the abradable coating layer and the abrasive coating layer is doped with yttrium, gadolinium, dysprosium, or any other stabilizer of zirconia in the tetragonal or cubic phase.

10. An assembly according to any one of claims 1 to 9, wherein the abradable coating layer is deposited on the stator by thermal spraying, by sintering, or by a sol-gel method.

11. An assembly according to any one of claims 1 to 10, wherein the abrasive coating layer is deposited on the tip of the rotor by thermal spraying, by sintering, by an electrolytic method, by a vapor deposition method, or by a sol-gel method.

12. An assembly according to any one of claims 1 to 11, wherein the rotor is a turbine blade and the stator is a turbine casing.

13. A gas turbine engine including at least one rotor-stator assembly according to any one of claims 1 to 12.
